# EUROPÄISCHE PATENTSCHRIFT

(11) **EP 0 926 791 B1**
(45) Veröffentlichungstag und Bekanntmachung des Hinweises auf die Patenterteilung: **29.11.2006**
(21) Anmeldenummer: 98123631.8
(22) Anmeldetag: 10.12.1998
(51) Int. Cl.: H02B 1/21

(54) **Adapter mit Adaptergehäuse und daran befestigbarem Gerätehalter für elektrische Installationsgeräte**
Adapter having a base housing for a busbar system with a number of busbars
Adaptateur avec un boîtier de base pour un jeu de barres omnibus avec plusieurs barres de distribution de courant

(30) Priorität: 15.12.1997 DE 19755841
(43) Veröffentlichungstag der Anmeldung: 30.06.1999
(73) Patentinhaber: Rittal-Werk Rudolf Loh GmbH & Co. KG, 35745 Herborn (DE)
(72) Erfinder: Wagener,Hans, 35716 Dietzhölztal 2 (DE)
(74) Vertreter: Fleck, Hermann-Joseph

(56) Entgegenhaltungen:
- DE-A- 19 515 923
- DE-C- 19 515 922

## Beschreibung

Die Erfindung betrifft einen Adapter mit einem Adaptergehäuse, das an den Stromsammelschienen eines Sammelschienensystems festlegbar ist und Anschlußkontakte aufnimmt, die elektrisch leitend mit den Stromsammelschienen verbindbar sind, bei dem ein Gerätehalter zum Befestigen von elektrischen Installationsgeräten in verschiedenen Positionen mit dem Adaptergehäuse verbindbar ist, wobei der Gerätehalter mit Halteelemente und das Adaptergehäuse mit Aufnahmeelemente für die Halteelemente des Gerätehalters versehen sind.

Ein Adapter dieser Art gemäß dem Oberbegriff des Anspruchs 1 ist in DE-C-195 15 922 beschrieben.

Ein weiterer Adapter dieser Art ist aus der DE 42 42 704 A1 bekannt. Das Adaptergehäuse ist im Randbereich der Längsseiten mit angeformten, hochstehenden Lochleisten versehen, deren Löcher aufeinander ausgerichtet in einheitlicher Teilung angeordnet sind. Der Gerätehalter trägt im Abstand der Lochreihen zwei Arretierungszapfen, die in ein Lochpaar der Lochleisten einführbar sind und so die Positionen zwischen Adaptergehäuse und Gerätehalter festlegen. Dabei bestimmt die Teilung der Löcher in den Lochleisten die stufige Verstellbarkeit des Gerätehalters auf dem Adaptergehäuse. Am Gerätehalter sind zusätzlich zwei Führungsstege angeformt, die sich an den einander zugekehrten Innenseiten der beiden Lochleisten anlegen und so die Position des Gerätehalters quer zu den Längsseiten des Adapters festlegen. Diese Abstimmung von Adaptergehäuse und Gerätehalter bringt nur eine stufige Positionseinstellung für die elektrischen Installationsgeräte quer zu Stromsammelschienen und außerdem behindern die hochstehenden Lochleisten des Adaptergehäuses dessen Einsatz für andere Adapterausführungen und andere Befestigungsarten von Installationsgeräten.

Dieselben Nachteile weist auch ein Adapter auf, wie er aus der DE 195 15 923 C2 bekannt ist.

Es ist Aufgabe der Erfindung, einen Adapter der eingangs erwähnten Art zu schaffen, bei dem die Position des Gerätehalters auf dem Adaptergehäuse quer zu den Stromsammelschienen kontinuierlich verändert und das Adaptergehäuse ohne Beeinträchtigung durch die Aufnahmeelemente für den Gerätehalter auch für den Aufbau andersartiger Adapter verwendet werden kann.

Diese Aufgabe wird nach der Erfindung dadurch gelöst, daß die Halteelemente des Gerätehalters als Haltestege ausgebildet sind, die in als Aufnahmenuten ausgebildete Aufnahmeelemente des Adaptergehäuses oder von Randleisten einführbar und längs dieser kontinuierlich verstellbar und darin arretierbar sind.

Bei dieser Ausgestaltung der Halteelemente des Gerätehalters und der Aufnahmeelemente des Adaptergehäuses kann das auf dem Gerätehalter befestigte elektrische Installationsgerät kontinuierlich quer zu den Stromsammelschienen und damit auch zu den im Bereich der Schmalseiten des Adaptergehäuses angeordneten Anschlußkontakten verstellt werden. An der Oberseite des Adaptergehäuses stehen die Aufnahmeelemente nicht vor, so daß eine einheitliche Abschlußebene erreicht wird, in der auch ohne Beeinträchtigung andere Aufbauten festlegbar sind.

Nach einer Ausgestaltung ist vorgesehen, daß die Aufnahmenuten im Bereich der Längsseiten in die Oberseite des Adaptergehäuses eingebracht sind, sowie daß die Aufnahmenuten in die Oberseite der Randleisten eingeformt sind und daß die Randleisten mit Rastfedern versehen sind, die in Rastaufnahmen oder die Aufnahmenuten des Adaptergehäuses einführbar und/oder einrastbar sind.

Der Gerätehalter ist dann wahlweise direkt am Adaptergehäuse oder an den mit dem Adaptergehäuse angebrachten Randleisten anbringbar, wobei stets die kontinuierliche Verstellbarkeit des Gerätehalters erreicht wird.

Ist nach einer weiteren Ausgestaltung vorgesehen, daß die Aufnahmenuten des Adaptergehäuses und der Randleisten als Rastnuten und die Haltestege des Gerätehalters als Raststege ausgebildet sind, dann wird schon beim Anbringen des Gerätehalters am Adaptergehäuse, beim Anbringen der Randleisten am Adaptergehäuse und beim Anbringen des Gerätehalters an den Randleisten ein in vielen Fällen ausreichender Halt der Verbindung erreicht. Bei schweren und großen Installationsgeräten kann der Halt dadurch noch verbessert werden, daß der Gerätehalter mittels Schraubverbindungen fest mit dem Adaptergehäuse oder den Randleisten verbunden ist.

Ist das Adaptergehäuse mit eingeformten Aufnahmen für Kontaktschienen versehen, die eine Verbindung von den Stromsammelschienen zu den Anschlußkontakten übernehmen, dann kann der Adapter im Bereich seiner Oberseite dadurch berührungssicher gemacht werden, daß die Oberseite des Adaptergehäuses zwischen den Aufnahmenuten oder den aufgebrachten Randleisten mittels eines Abdeckelementes abgedeckt ist.

Zur Vereinfachung der Montage kann dabei vorgesehen sein, daß die Oberseite des Adaptergehäuses zwischen den Aufnahmenuten mit Rast-Verbindungsaufnahmen und die Unterseite des Abdeckelementes mit darauf abgestimmten und ausgerichteten Rast-Verbindungselementen versehen sind.

Die Erfindung wird anhand eines in den Zeichnungen dargestellten Ausführungsbeispiels näher erläutert. Es zeigen jeweils in perspektivischer Ansicht:
- Fig. 1: ein Adaptergehäuse mit Aufnahmenuten als Aufnahmeelemente für einen Gerätehalter,
- Fig. 2: ein Abdeckelement zum Abdecken der Oberseite des Adaptergehäuses,
- Fig. 3: getrennte Randleisten mit Aufnahmenuten als Aufnahmeelemente für einen Gerätehalter, die mit dem Adaptergehäuse verbindbar sind,
- Fig. 4: einen aus Adaptergehäuse nach Fig. 1, einem Abdeckelement nach Fig. 2 und einem Paar von Randleisten nach Fig. 3 zusammengesetzten Adapter, und

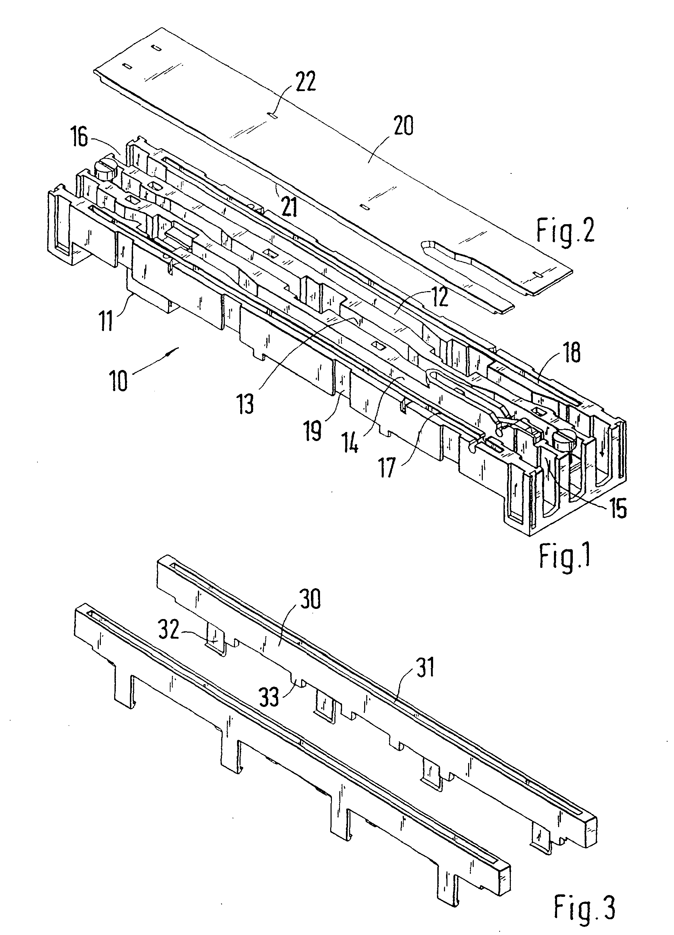

Das Adaptergehäuse 10 nach Fig. 1 hat angeformte Einhängehaken 11 zum Einhängen an den Stromsammelschienen eines Sammelschienensystems. Die Anzahl der Einhängehaken und ihre Verteilung am Adaptergehäuse 10 richtet sich nach der Anzahl der Stromsammelschienen und deren Abstand im Sammelschienensystem. In die Oberseite des Adaptergehäuses 10 sind Aufnahmen 12, 13 und 14 für Kontaktschienen eingeformt, welche in bekannter Weise elektrische Verbindungen von den im Bereich der Schmalseiten in Kontaktaufnahmen 15 bzw. 16 eingebrachten Anschlußkontakten zu den Verbindungskontakten der Einhängehaken und damit den Stromsammelschienen herstellen.

Im Randbereich der Längsseiten des Adaptergehäuses 10 sind als Aufnahmeelemente Aufnahmenuten17 und 18 eingeformt, die auch als Rast-Aufnahmenuten ausgebildet sein können. Dabei können die Rast-Aufnahmen von der Unterseite des Adaptergehäuses 10 aus leicht entformt werden.

Die Oberseite des Adaptergehäuses 10 trägt zusätzliche Rastaufnahmen, so daß auch Aufbauten mit entsprechend ausgebildeten und verteilten Rastelementen mit dem Adaptergehäuse 10 verbunden werden können. Ein hutschienenartiger Gerätehalter trägt an seiner Unterseite Haltestege, die auf den Abstand der Aufnahmenuten 17 und 18 des Adaptergehäuses 10 abgestimmt und daher in diese eingeführt werden können. Dabei bleibt der Gerätehalter in den Aufnahmenuten 17 und 18 beliebig verstellbar, auch wenn die Haltestege als Raststege und die Aufnahmenuten 17 und 18 als Rast-Aufnahmenuten ausgebildet sind. Der Gerätehalter kann zusätzlich Schraubenaufnahmen für Befestigungsschrauben aufweisen, die direkt mit den Aufnahmenuten 17 und 18 oder mit Schiebemuttern verschraubt werden können, die in die Aufnahmenuten 17 und 18 eingebracht und darin unverlierbar, jedoch verschiebbar gehalten sind.

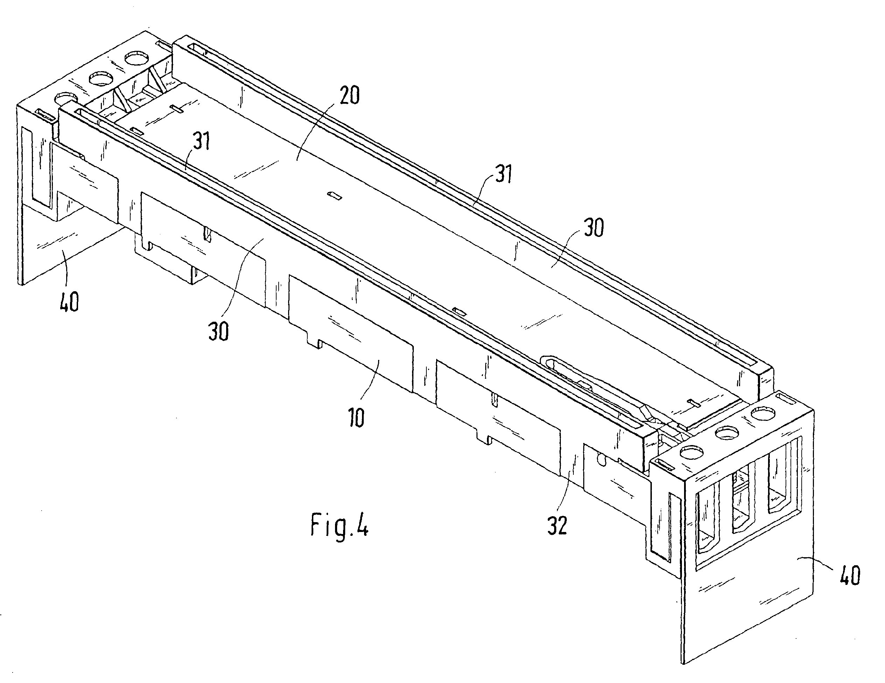

Wie die Fig. 2 zeigt, kann mit einem Abdeckelement 20 die Oberseite des Adaptergehäuses 10 mit den eingebrachten Kontaktschienen und Anschlußkontakten berührungssicher abgedeckt werden. Wie mit den Bezugszeichen 21 und 22 angedeutet, kann das Abdeckelement 20 mit Verbindungselementen versehen sein, die in Verbindungsaufnahmen zwischen den Aufnahmenuten 17 und 18 in der Oberseite des Adaptergehäuses 10 einführbar und darin verrastbar sind. Dabei kann das Abdeckelement 20 auch so ausgelegt sein, daß es die Aufnahmenuten 17 und 18 des Adaptergehäuses 10 frei läßt, so daß Randleisten 30 nach Fig. 3 mit dem Adaptergehäuse 10 verbindbar bleiben. Diese Randleisten 30 tragen in ihren Oberseiten wieder Aufnahmenuten 31 als Aufnahmeelemente, die wiederum als Rast-Aufnahmenuten ausgebildet sein können. An den Unterseiten der Randleisten 30 sind Rastfedern 32 und 33 angeformt, die in Rastaufnahmen 19 und die Aufnahmenuten 17 und 18 einführbar und darin verrastbar sind, so daß sich ein Adapter ergibt, wie er in Fig. 4 gezeigt ist. Der Gerätehalter kann mit den Haltestegen in die Aufnahmenuten 31 der Randleisten 30 eingeführt und darin in die gewünschte Position gebracht werden, bevor er erforderlichenfalls mittels Schraubverbindungen fest mit den Randleisten 30 verbunden und in der eingestellten Position absolut sicher arretiert wird.

## Patentansprüche

1. Adapter mit einem Adaptergehäuse (10), das an den Stromsammelschienen eines Sammelschienensystems festlegbar ist und Anschlußkontakte aufnimmt, die elektrisch leitend mit den Stromsammelschienen verbindbar sind, bei dem ein Gerätehalter zum Befestigen von elektrischen Installationsgeräten in verschiedenen Positionen mit dem Adaptergehäuse verbindbar ist, wobei der Gerätehalter mit Halteelemente und das Adaptergehäuse (10) mit Aufnahmeelemente für die Halteelemente des Gerätehalters versehen sind,
**dadurch gekennzeichnet,**
**daß** die Halteelemente des Gerätehalters (50) als Haltestege (51) ausgebildet sind, die in als Aufnahmenuten (17,18; 31) ausgebildete in der Oberseite des Adaptergehäuses (10) oder von mit dem Adaptergehäuse (10) Verbundenen Randleisten (30) angeordneten Aufnahmeelemente einführbar und längs dieser kontinuierlich verstellbar und darin arretierbar sind.

2. Adapter nach Anspruch 1,
**dadurch gekennzeichnet,**
**daß** die Aufnahmenuten (17,18) im Bereich der Längsseiten in die Oberseite des Adaptergehäuses (10) eingebracht sind.

3. Adapter nach Anspruch 1 oder 2,
**dadurch gekennzeichnet,**
**daß** die Aufnahmenuten (31) in die Oberseite der Randleisten (30) eingeformt sind und
**daß** die Randleisten (30) mit Rastfedern (32, 33) versehen sind, die in Rastaufnahmen (19) oder die Aufnahmenuten (17, 18) des Adaptergehäuses (10) einführbar und/oder einrastbar sind.

4. Adapter nach einem der Ansprüche 1 bis 3,
**dadurch gekennzeichnet,**
**daß** die Aufnahmenuten (17, 18; 31) des Adaptergehäuses (10) und der Randleisten (30) als Rastnuten und die Haltestege des Gerätehalters als Raststege ausgebildet sind.

5. Adapter nach einem der Ansprüche 1 bis 4,
**dadurch gekennzeichnet,**
**daß** die Oberseite des Adaptergehäuses (10) zwischen den Aufnahmenuten (17, 18) oder den aufgebrachten Randleisten (30) mittels eines Abdeckelementes (20) abgedeckt ist.

6. Adapter nach Anspruch 5,
**dadurch gekennzeichnet,**
**daß** die Oberseite des Adaptergehäuses (10) zwischen den Aufnahmenuten (17,18) mit Rast-Verbindungsaufnahmen und die Unterseite des Abdeckelementes (20) mit darauf abgestimmten und ausgerichteten Rast-Verbindungselementen versehen sind.

7. Adapter nach einem der Ansprüche 1 bis 6,
**dadurch gekennzeichnet,**
**daß** der Gerätehalter mittels Schraubverbindungen fest mit dem Adaptergehäuse (10) oder den Randleisten (30) verbunden ist.

## Claims

1. Adapter having an adapter housing (10), which can be fixed to the busbars of a busbar system and accommodates connection contacts, which can be electrically conductively connected to the busbars, in the case of which adapter a device holder for fixing electrical service devices in different positions can be connected to the adapter housing, the device holder being provided with holding elements, and the adapter housing (10) being provided with accommodating elements for the holding elements of the device holder, **characterized in that** the holding elements of the device holder (50) are in the form of holding webs (51), which can be inserted into accommodating elements, which are in the form of accommodating grooves (17, 18; 31) and are arranged in the upper side of the adapter housing (10) or of edge strips (30) connected to the adapter housing (10), and can be adjusted continuously along said accommodating elements and can be arrested therein.

2. Adapter according to Claim 1, **characterized in that** the accommodating grooves (17, 18) are introduced into the upper side of the adapter housing (10) in the region of the longitudinal sides.

3. Adapter according to Claim 1 or 2, **characterized in that** the accommodating grooves (31) are formed into the upper side of the edge strips (30), and **in that** the edge strips (30) are provided with latching springs (32, 33), which can be inserted and/or latched into latching receptacles (19) or the accommodating grooves (17, 18) of the adapter housing (10).

4. Adapter according to one of Claims 1 to 3, **characterized in that** the accommodating grooves (17, 18; 31) of the adapter housing (10) and of the edge strips (30) are in the form of latching grooves, and the holding webs of the device holder are in the form of latching webs.

5. Adapter according to one of Claims 1 to 4, **characterized in that** the upper side of the adapter housing (10) is covered by means of a cover element (20) between the accommodating grooves (17, 18) or the attached edge strips (30).

6. Adapter according to Claim 5, **characterized in that** the upper side of the adapter housing (10) is provided with latching connection receptacles between the accommodating grooves (17, 18), and the underside of the cover element (20) is provided with latching connection elements which are matched thereto and aligned therewith.

7. Adapter according to one of Claims 1 to 6, **characterized in that** the device holder is fixedly connected to the adapter housing (10) or the edge strips (30) by means of screw connections.

## Revendications

1. Adaptateur, avec un boîtier d'adaptateur (10) que l'on peut fixer dans les barres collectrices de courant d'un système de barres collectrices et qui réceptionne des contacts de raccordement pouvant être reliés de façon conductrice d'électricité avec les barres collectrices de courant, sur lequel un support de composants pour fixer des composants d'installation électrique peut être relié dans différentes positions avec le boîtier d'adaptateur, le support de composants étant muni d'éléments de retenue et le boîtier d'adaptateur (10) étant muni d'éléments de logement pour les éléments de retenue du support de composants, **caractérisé en ce que** les éléments de retenue du support de composants (50) sont conçus en tant que barrettes de retenue (51) que l'on peut introduire dans des éléments de logement conçus en tant que rainures de logement (17, 18 ; 31) disposées dans la face supérieure du boîtier d'adaptateur (10) ou de lisières (30) reliées avec le boîtier d'adaptateur (10) et qui sont réglables en continu le long de ces derniers et peuvent y être bloqués.

2. Adaptateur selon la revendication 1,
**caractérisé en ce que** dans la zone des côtés longitudinaux, les rainures de logement (17, 18) sont introduites dans la face supérieure du boîtier d'adaptateur (10).

3. Adaptateur selon la revendication 1 ou 2,
**caractérisé en ce que** les rainures de logement (31) sont moulées dans la face supérieure des lisières (30) et
**en ce que** les lisières (30) sont munies de ressorts d'enclenchement (32, 33) qui peuvent s'introduire et/ou s'enclencher dans des logements par enclenchement (19) ou dans les rainures de logement (17, 18) du boîtier d'adaptateur (10).

4. Adaptateur selon l'une quelconque des revendications 1 à 3,
**caractérisé en ce que** les rainures de logement (17, 18 ; 31) du boîtier d'adaptateur (10) et des lisières (30) sont conçues en tant que rainures d'enclenchement et les barrettes de retenue du support de composants sont conçues en tant que barrettes d'enclenchement.

5. Adaptateur selon l'une quelconque des revendications 1 à 4,
**caractérisé en ce que** entre les rainures de logement (17, 18) ou les lisières montées (30), la face supérieure du boîtier d'adaptateur (10) est recouverte par un élément formant couvercle (20).

6. Adaptateur selon la revendication 5,
**caractérisé en ce que** entre les rainures de logement (17, 18), la face supérieure du boîtier d'adaptateur (10) est munie de logements de liaison par enclenchement et **en ce que** la face inférieure de l'élément formant couvercle (20) est munie d'éléments de liaison par enclenchement adaptés et orientés par rapport à ces derniers.

7. Adaptateur selon l'une quelconque des revendications 1 à 6, **caractérisé en ce que** le support de composants est fixement relié au boîtier d'adaptateur (10) ou aux lisières (30) au moyen d'assemblages par vis.
